Europäisches Patentamt

European Patent Office

Office européen des brevets

(11) Publication number: **0 118 004**
**B1**

# EUROPEAN PATENT SPECIFICATION

(45) Date of publication of patent specification: **23.12.87**

(51) Int. Cl.⁴: **B 43 L 19/00, C 09 D 9/00**

(21) Application number: **84100786.7**

(22) Date of filing: **25.01.84**

(54) An ink eraser.

(30) Priority: **25.01.83 JP 11011/83**

(43) Date of publication of application:
**12.09.84 Bulletin 84/37**

(45) Publication of the grant of the patent:
**23.12.87 Bulletin 87/52**

(84) Designated Contracting States:
**DE FR GB**

(56) References cited:

**CHEMICAL ABSTRACTS, vol. 94, 1981, page 97,
no. 32400n, Columbus, Ohio, USA**

**CHEMICAL ABSTRACTS, vol. 97, 1982, page 97,
no. 164719v, Columbus, Ohio, USA**

(73) Proprietor: **SEED RUBBER COMPANY LTD.
5-25, 3-chome Uchindai-cho
Miyakojima-ku Osaka-shi (JP)**

(72) Inventor: **Nishioka, Yasuhiro
11-3, 6-chome Takadono
Asahi-ku Osaka-shi (JP)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

Courier Press, Leamington Spa, England.

## Description

The present invention relates to an ink eraser set comprising two or three parts.

A variety of ink erasers for writing ink, printing ink, copying ink, stamp ink and the like have been proposed. Generally, ink erasers utilizing oxydation-reduction reaction, for example, those for blue-black ink are a double fluid type composed of a bleaching powder aqueous solution and oxalic acid. Moreover, ink erasers for ball-point pens are also a double fluid type composed of a bleaching powder aqueous solution and an ink solvent of ball-point pens. These ink erasers are all double fluid types and therefore involve the following problems; (a) the portion erased has to be left to stand for 10 minutes or more after erasion to be dried before rewriting, (b) letters rewritten are liable to discolor or disappear with the lapse of time, and (c) the portion erased is liable to discolor.

It is an object of the present invention to provide an ink eraser set which enables rewriting immediately after erasion and which is free of discoloration of a paper after erasion, or discoloration or emaciation of written letters.

Said object is achieved by an ink eraser set comprising two parts, the first part comprising an agent composed of a powdery, paste or solid chlorine bleaching agent and the second part comprising an agent composed of a quick-drying solution, and an ink eraser set comprising three parts, the first part comprising an agent composed of a powdery, paste or solid chlorine bleaching agent, the second part comprising an agent composed of a quick-drying solution and the third part comprising an agent composed of a residual chlorine-disposing agent.

In a first embodiment of the invention, an ink eraser set comprising two parts, the first and second parts comprising first and second agents, respectively, is provided.

The chlorine bleaching agent as the first agent used in the present invention may include a powdery compound such as bleaching powder or a liquid compound such as a sodium hypochlorite aqueous solution. Higher bleaching powders having a high content of active chlorine, the main ingredient of which is hypochlorite, may also be used.

The quick-drying solution as the second agent used in the present invention includes organic solvents having lower boiling points, which are exemplified by ethers such as ethyl ether, ketones such as acetone, aldehydes such as furfural, esters such as methyl formate, ethyl formate, propyl formate, methyl acetate, ethyl acetate and propyl acetate and hydrocarbon halides such as methylene chloride and ethylidene dichloride.

The first agent may be in the form of powder, paste and solid, but paste and solid forms are preferred because of easy handling. They permit coating on the desired and limited portion.

As the first agent in the form of powder, bleaching powder may be used without any processing. It may be also obtained by impregnating silicates such as calcium silicate with a liquid chlorine bleaching agent such as a sodium hypochlorite solution and then drying the same to obtain a powder.

The first agent in the form of paste may be obtained by dissolving a binding agent in a suitable solvent such as tetrahydrofuran, methyl ethyl ketone, toluene and acetone, in which said chlorine bleaching agent in the form of powder is dispersed.

Examples of the binding agent may include chlorine-resistant rubbers exemplified by ethylene-propylene rubbers such as "EP-33" (Tradename, produced by Japan Synthetic Rubber Co., Ltd.), chlorosulfonated polyethylenes such as "HYPALON"® (produced by E. I. Du Pont de Nemours & Co., Ltd.), silicone rubbers such as "KE 76", "KE 77" (Tradenames, produced by Shin-Etsu Chemical co., Ltd.); and thermoplastic elastomers exemplified by polyethylene elastomers such as "TPE" (Tradename, produced by Sumitomo Chemical Co., Ltd.), and polyvinyl chloride elastomers such as "SMIFLEX"® (produced by Sumitomo Bakelite Co., Ltd.). Even when the binding agent is not used, good results leaving no binding agent on the paper are obtained. Moreover, gypsum and surface active agents such as "EMAL"® (produced by Kao-Atlas Co., Ltd.) and "NEW REX"® "SYNTREX"® (produced by Nippon Oils & Fats Co., Ltd.) may also be used as the foregoing binding agent. The first agent in the form of paste may also be prepared by dispersing a powdery chlorine bleaching agent in a liquid chlorine bleaching agent such as a sodium hypochlorite solution and sodium chlorite. Moreover, it may also be prepared by impregnating silicates such as calcium silicate with the foregoing liquid chlorine bleaching agents. The mixing ratio is, for example, 100 parts by weight of bleaching powder and 40 to 100 parts by weight of sodium hypochlorite.

The first agent in the form of solid may be obtained by pouring into a mold the foregoing paste agent prepared by using binding agents and then drying at a temperature between room temperature and approximately 60°C. The foregoing powdery agent obtained by impregnating silicates with the liquid chlorine bleaching agent and drying may also be used. The solid agent should preferably be processed into a chalk- or lipstick-shape so that it may be handled without being contacted by hands. The mixing ratio of binding agents, solvents and chlorine bleaching agent is not specifically limited. If a solvent is used in greater amounts, the amount of solvent removed in the later drying step increases while uniform and easy mixing of the binding agent and the bleaching agent is attained. If the binding agent is used in greater amount, the amount of active chlorine contained in the product decreases, and consequently the erasion ability decreases. Accordingly, the mixing ratio should be determined, taking into account the foregoing relationship. For example, 100 parts by weight of binding agents, 150 to 300 parts by weight of solvents,

2

and 400 to 600 parts by weight of chlorine bleaching agents in the form of powder may be used. The addition of perfumes to the first agent is a preferred embodiment.

Furthermore, it is also possible to provide the solid first agent by heating with stirring a vinyl chloride resin, a plastizier, if necessary, a filler and a stabilizer to obtain a gel, to which a chlorine bleaching agent such as bleaching powder is uniformly dispersed.

To the second agent used in the present invention, residual chlorine-disposing agents such as ammonia or acid sodium sulfite may be added in a small amount. Penetrants such as surface active agents (e.g. anionic surface active agents are preferred), ink solvents such as ethers and alcohols, or perfumes may further be added.

In a second embodiment of the invention an ink eraser set comprising three parts, the first and second parts comprising the foregoing first and second agents, and the third part comprising a third agent composed of a residual chlorine-disposing agent is provided. The residual chlorine-disposing agent removes active chlorine from the surface of the paper, whereby discoloration of the paper is not only prevented, but rewriting immediately after erasion is made possible. Therefore, any substance which is able to react with the active chlorine may be suitably used, including, for example, solutions obtained by dissolving ammonia or acid sodium sulfate in an organic solvent such as acetone. An example of the mixing ratio is 100 parts by weight of organic solvents and about 0.3 to about 5 parts by weight of residual chlorine-disposing substances.

When the ink eraser set of the present invention is utilized, the first agent is at first applied to the spot to be erased by sprinkling or coating, then the second agent is applied by coating. In this case, rubbing out the spot slightly accelerates the reaction and is thus recommendable. Breathing upon the spot after coating of the second agent quickens vaporization to thus shorten the rewriting time which is the time required for rewriting after erasion. The rewriting time may be reduced to several seconds or substantially zero second by using the second agent containing the residual chlorine-disposing agent or the third agent composed of the residual chlorine-disposing agent.

When the third agent is used in combination with the first and the second agents, rewriting becomes possible with once or double coating of the third agent. The first and the second agents may also be mixed immediately before use and then applied. Each of the three kinds of agents may be effectively applied to the spot to be erased on cloths, papers, sponges, absorbent cotton, brushes and the like.

The first agent in the form of solid may be applied by being rubbed on a paper.

The following examples illustrate the invention.

Examples 1—6 and comparative Examples 1—2

A: Preparation of first, second and third agents

Each of the first, second and third agents was prepared as set forth in Table 1.

The first agent of Example 1 was obtained by completely dissolving 100 parts by weight of ethylene-propylene rubber "EP-33" (produced by Japan Synthetic Rubber Co., Ltd.) in 200 parts by weight of toluene, adding, with stirring, 500 parts by weight of bleaching powder commercially available (active chlorine: 60%, produced by Nankai Chem. Ind. Co., Ltd.), then pouring the same into a mold and drying at about 50°C to thus provide a rod-shaped sample.

In Examples 2 and 3, the first agents in the form of powder were prepared by impregnating calcium silicate with sodium hypochlorite (active chlorine: 12%) and sodium chlorite (active chlorine: 30%), respectively.

The first agent in the form of paste of Example 4 was provided by adding 80 parts by weight of sodium hypochlorite (active chlorine: 12%) to 100 parts by weight of bleaching powder and stirring thoroughly.

The first agent of Example 5 was bleaching powder commercially available.

The first agent of Example 6 was prepared by a process wherein 100 parts by weight of polyvinyl chloride resin "PSH-10" (Tradename, produced by Kanegafuchi Chem. Ind. Co., Ltd.), 100 parts by weight of a plasticizer (dibutyl phthalate), 100 parts by weight of a filler (calcium carbonate) and 1 part of a stabilizer ("FG500A", produced by Nitto Chem. Co., Ltd.) were stirred at 100°C for about 10 minutes. 30 parts by weight of bleaching powder were uniformly dispersed in 100 parts by weight of the resulting mixture. Then the obtained mixture was molded.

B: Change of the first agent with the lapse of time and erasion test

Changes of the first agent with the lapse of time were observed and an erasion test was carried out. In the erasion test, erasion effects, rewriting time and discoloration of papers after erasion were observed. The obtained results are given in Table 2. Ball-point pens used in the erasion test were "TOMBO BC-R BR-RS 80.05", "BIC 81—04", "ZEBRA N-5100 CAL 79.07", "OHTO thin letters E 114 80.02 No. 40", "NIKKO 81—09", "MITSUBISHI BA-55 80—02 A01", "ZEBRA Ball Be 0.5 UB", "PILOT Blue-Black", and "MONTBLANC fountain pen SCRERSLEBNER SC 16".

TABLE 1

| Example | First agent | (Parts by weight) | Second agent | (Parts by weight) | Third agent | (Parts by weight) |
|---|---|---|---|---|---|---|
| 1 | Bleaching powder<br>Ethylene-propylene rubber | 100<br>20 | Acetone<br>Furfural<br>Surface active agent*<br>Ethylene glycol monomethyl ether | 100<br>5<br>0.5<br>1 | Acetone<br>Ammonia | 100<br>0.5 |
| 2 | Sodium hypochlorite<br>Calcium silicate | 25<br>100 | Acetone<br>Methylene chloride<br>Surface active agent**<br>Ethylene glycol monobutyl ether | 100<br>5<br>0.5<br>1 | Acetone<br>Acid sodium sulfite | 100<br>1 |
| 3 | Sodium chlorite<br>Calcium silicate | 25<br>100 | Acetone<br>Methyl acetate | 100<br>10 | Acetone<br>Ammonia<br>Ethylene glycol monomethyl ether<br>Surface active agent* | 100<br>1<br>1<br>0.5 |
| 4 | Bleaching powder<br>Sodium hypochlorite | 100<br>80 | Acetone<br>Surface active agent** | 100<br>0.5 | Acetone<br>Acid sodium sulfite<br>Ethylene glycol monobutyl ether | 100<br>0.5<br>1 |
| 5 | Bleaching powder | 100 | Acetone<br>Furfural<br>Surface active agent*<br>Ethylene glycol monomethyl ether<br>Ammonia | 100<br>5<br>0.5<br>1<br>0.5 | | |
| 6 | Bleaching powder<br>PVC "PSH-10"<br>Plasticizer<br>Filler<br>Stabilizer | 100<br>100<br>100<br>100<br>1 | Acetone<br>Furfural<br>Surface active agent*<br>Ethylene glycol monomethyl ether<br>Ammonia | 100<br>5<br>0.5<br>1<br>0.5 | | |

*"SYNTREX EHR"® (Nippon Oils & Fats Co., Ltd.)
**"EMAL 40"® (Kao-Atlas Co., Ltd.)

TABLE 2

| No. | Changes of first agent with the lapse of time | Rewriting time | | Discoloration of papers after erasion |
|---|---|---|---|---|
| | | first agent + second agent | first agent + second agent + third agent | |
| Example 1 | No change even when standing in the ambience for 2 months | 30 sec.~1 min. | 1~2 sec. (Immediately after erasion) | None |
| 2 | No change even when standing in the ambience for 1 hour/day for 2 months | 1~2 min. | do. | do. |
| 3 | do. | do. | do. | do. |
| 4 | No change even when standing in the ambience for 2 months | do. | do. | do. |
| 5 | do. | 30 sec.~1 min. | | do. |
| 6 | do. | do. | | do. |
| Comparative Example 1* | Violent decomposition took place after 3 days standing in the ambience for 1 hour/day | 8~12 min. (Rewriting is possible after about 5 min, but letters disappear shortly) | | Discolored to yellow |
| 2** | do. | do. | | do. |

*Powerful ink eraser "KIERU" for ball-point pens (produced by Shoken)
**"KIRE-NI #8000" ink eraser for ball-point pens (produced by Sphinx)

**0 118 004**

As stated above, according to the present invention employing a chlorine bleaching agent in a non-liquid form in conjunction with a quick-drying solution, the rewriting time can be reduced to 1 to 2 minutes from approximately 10 minutes for the conventional ink erasers. Moreover, when used together with a residual chlorine-disposing agent, the rewriting time can be surprisingly reduced to substantially zero (i.e. rewriting is possible immediately after erasion) so that writing efficiency is greatly enhanced. Furthermore, the ink eraser of the present invention brings about neither discoloration, decline, disappearance of rewritten letters nor discoloration of papers.

**Claims**

1. An ink eraser set comprising two parts, the first part comprising an agent composed of a powdery, paste or solid chlorine bleaching agent and the second part comprising an agent composed of a quick-drying solution.

2. The ink eraser of Claim 1, wherein said second agent contains a residual chlorine-disposing agent.

3. An ink eraser set comprising three parts, the first part comprising an agent composed of a powdery, paste or solid chlorine bleaching agent, the second part comprising an agent composed of a quick-drying solution and the third part comprising an agent composed of a residual chlorine-disposing agent.

4. The ink eraser of Claims 1 to 3, wherein said chlorine bleaching agent is bleaching powder.

5. The ink eraser of Claims 1 to 3, wherein said quick-drying solution comprises at least one compound selected from the group consisting of ethers, ketones, aldehydes, esters and hydrocarbon halides.

6. The ink eraser of Claims 2 or 3, wherein said residual chlorine-disposing agent is ammonia or acid sodium sulfite.

**Patentansprüche**

1. Tintenlöscher- bzw. Tintenentfernerset, umfassend zwei Teile, wobei das erste Teil ein Mittel umfaßt, das aus einem pulvrigen, pastenartigen oder festen Chlorbleichmittel zusammengesetzt ist, und das zweite Teil ein Mittel umfaßt, das aus einer schnelltrocknenden Lösung zusammengesetzt ist.

2. Tintenlöscherset nach Anspruch 1, worin das zweite Mittel ein Mittel zum Entfernen des restlichen Chlors enthält.

3. Tintenlöscher-bzw. Tintenentfernerset, umfassend drei Teile, wobei das erste Teil ein Mittel umfaßt, das aus einem pulvrigen, pastenartigen oder festen Chlorbleichmittel zusammengesetzt ist, das zweite Teil ein Mittel umfaßt, das aus einer schnelltrocknenden Lösung zusammengesetzt ist, und das dritte Teil ein Mittel umfaßt, das aus einem Mittel zur Entfernung des restlichen Chlors zusammengesetzt ist.

4. Tintenlöscherset nach Anspruch 1 oder 3, worin das Chlorbleichmittel Bleichpulver ist.

5. Tintenlöscherset nach Anspruch 1 oder 3, worin die schnelltrocknende Lösung wenigstens eine Verbindung, gewählt aus der Gruppe, bestehend aus Ethern, Ketonen, Aldehyden, Estern und Kohlenwasserstoffhalogeniden, umfaßt.

6. Tintenlöscherset nach Anspruch 2 oder 3, worin das Mittel zur Entfernung des restlichen Chlors Ammoniak oder saures Natriumsulfit ist.

**Revendications**

1. Nécessaire effaceur d'encre comprenant deux parties, la première partie comprenant un agent composé d'un agent de blanchiment au chlore pulvérulent, pâteux ou solide, et la seconde partie comprenant un agent composé d'une solution à séchage rapide.

2. Effaceur d'encre de la revendication 1, dans lequel ce second agent contient un agent d'élimination du chlore résiduel.

3. Nécessaire effaceur d'encre comprenant trois parties, la première partie comprenant un agent composé d'un agent de blanchiment au chlore pulvérulent, pâteux ou solide, la seconde partie comprenant un agent composé d'une solution séchant rapidement et la troisième partie comprenant un agent composé d'un agent d'élimination du chlore résiduel.

4. Effaceur d'encre des revendications 1 ou 3, dans lequel cet agent de blanchiment au chlore est de la poudre de blanchiment.

5. Effaceur d'encre des revendications 1 ou 3, dans lequel cette solution séchant rapidement comprend au moins un composé choisi dans le groupe constitué des éthers, cétones, aldéhydes, esters et hydrocarbures halogénés.

6. Effaceur d'encre des revendications 2 ou 3, dans lequel cet agent d'élimination du chlore résiduel est l'ammoniaque ou le sulfite acide de sodium.